# EUROPÄISCHE PATENTSCHRIFT

(11) **EP 3 611 394 B1**
(45) Veröffentlichungstag und Bekanntmachung des Hinweises auf die Patenterteilung: **13.01.2021**
(21) Anmeldenummer: 19191450.6
(22) Anmeldetag: 13.08.2019
(51) Int. Cl.: F16C 35/04

(54) **ANSCHLUSSKONSTRUKTION FÜR EINE WÄLZLAGERANORDNUNG**
CONNECTION STRUCTURE FOR A ROLLING BEARING ASSEMBLY
STRUCTURE DE RACCORDEMENT POUR UN DISPOSITIF DE PALIER À ROULEAUX

(30) Priorität: 14.08.2018 DE 102018213672
(43) Veröffentlichungstag der Anmeldung: 19.02.2020
(73) Patentinhaber: thyssenkrupp rothe erde Germany GmbH, 44137 Dortmund (DE); thyssenkrupp AG, 45143 Essen (DE)
(72) Erfinder: Voß, Bernd, 59556 Lippstadt (DE); Mika, Marcel, 59558 Lippstadt (DE)
(74) Vertreter: thyssenkrupp Intellectual Property GmbH

(56) Entgegenhaltungen:
- DE-A1-102006 027 090
- DE-A1-102006 031 456
- DE-A1-102008 050 620
- DE-A1-102013 214 580
- DE-A1-102015 209 307
- DE-A1-102015 209 315
- DE-A1-102016 222 536
- DE-U1- 20 113 371
- US-A- 2 352 911

## Beschreibung

### Stand der Technik

Die vorliegende Erfindung betrifft eine Wälzlageranordnung mit einem Außenring und einem zumindest teilweise innerhalb des Außenrings gelagerten Innenring, wobei der Außenring und der Innenring um eine Drehachse relativ zueinander drehbar sind, wobei zwischen dem Außenring und dem Innenring eine Mehrzahl von Wälzkörpern angeordnet sind. Innenring und Außenring bilden somit die Lagerringe der Wälzlageranordnung.

Wälzlageranordnungen sind ein gängiger Bestandteil von technischen Geräten und Anlagen, bei denen Komponenten drehbar zueinander gelagert werden. Klassische Wälzlagerformen bestehen in der Regel aus Lagerringen, Wälzkörpern, Distanzhaltern und gegebenenfalls Dichtungen. Sie können direkt mit den sich drehenden Elementen, zum Beispiel Wellen oder Achsen integriert sein oder in universell einsetzbaren Bauformen hergestellt und auf die Welle oder Achse montiert werden. Je nach Art und Weise, wie das Wälzlager in die technische Vorrichtung eingebunden wird, ist es häufig der Fall, dass eine oder mehrere Anschlusskomponenten wie Flansche oder Anschlussplatten als separate Bauteile am Lager befestigt werden müssen. Dies erfordert zusätzlichen Montageaufwand und führt hinsichtlich der Passung eventuell zu Genauigkeitsverlusten.

Aus DE 10 2008 050 620 A1 ist eine verdrehbare Kopplung zweier koaxialer Anschlusselemente bekannt. Um einer unerwünschten Verformung der Drehverbindung unter Einwirkung von Kräften entgegenzuwirken, trägt wenigstens eines der Anschlusselemente an seiner dem Spalt abgewandten Fläche einen rundumlaufenden, flächigen Ansatz. Der Ansatz steht in Kontakt zu dem Ring der Drehverbindung und stützt denselben ab. Der Ansatz kann zum Abbremsen und Stillsetzen der beiden, gegeneinander verdrehbaren Ringe verwendet werden, indem wenigstens ein Teil des flächigen Ansatzes als rotationssymmetrische Anlagefläche für Bremsbacken ausgebildet ist.

Aus den Dokumenten DE 10 2015 209 315 A1, DE 10 2015 209 307 A1, DE 10 2013 214 580 A1, DE 10 2006 031 456 A1 und DE 10 2006 027 090 A1 sind Radlagereinheiten zur Lagerung eines antreibbaren Rades eines Fahrzeuges bekannt.

### Offenbarung der Erfindung

Der vorliegenden Erfindung liegt die Aufgabe zugrunde, eine Wälzlageranordnung anzugeben, die in Bezug auf Montage und Verschleiß eines Verstellantriebs optimiert ist.

Gelöst wird diese Aufgabe durch eine Wälzlageranordnung der eingangs genannten Art, wobei die Wälzlageranordnung eine Anschlusskonstruktion aufweist, die entweder fest mit dem Innenring oder fest mit dem Außenring verbunden ist, wobei die Anschlusskonstruktion eine Mehrzahl von Anschlusskomponenten aufweist.

Erfindungsgemäß wird durch eine solche Anschlusskonstruktion eine Integration verschiedener Anschlusskomponenten mit der Wälzlageranordnung erreicht. Dabei wird die Anordnung aus Wälzlager und Anschlusskonstruktion so gestaltet, dass Teile der Lagerringe für Anschlusszwecke ausgestaltet sind. Zu diesem Zweck weist die Anschlusskonstruktion eine oder mehrere Anschlusskomponenten auf, die sich beim Einbau des Wälzlagers mit den entsprechenden Elementen der umgebenden Konstruktion verbinden lassen. Denkbar ist dabei sowohl eine Anordnung von Standardkomponenten, die mehrere gängige Anschlussmöglichkeiten zur Verfügung stellen, als auch eine auf spezifische Anwendungen abgestimmte Zusammenstellung von Anschlusskomponenten. Die Anschlusskonstruktion kann entweder mit dem rotierenden Ring oder dem nichtrotierenden Ring verbunden sein, so dass die Anschlusskonstruktion entweder bei Drehung des Lagers mitrotiert oder ortsfest bleibt. Bei Anschlusskomponenten, auf die im eingebauten Zustand Kräfte oder Drehmomente wirken, werden diese Kräfte und Drehmomente über das Lager (mit integrierter Anschlusskonstruktion) in die umgebende Konstruktion übertragen.

Gemäß der Erfindung ist das Lager so gestaltet, dass eine Wälzkörperlaufbahn direkt in die Anschlusskonstruktion integriert ist. Die Anschlusskonstruktion fungiert damit entweder als Außen- oder Innenring und bildet nach dem Zusammenfügen mit dem entsprechenden anderen Lagerring und den Wälzkörpern eine funktionale Einheit. Die Laufbahn kann dabei eine umlaufende Fläche der Anschlusskonstruktion sein, auf der die Wälzkörper abrollen. Gemäß einer bevorzugten Ausführungsform kann die Fläche in einer Ausnehmung verlaufen, die eine Führung der Wälzkörper ermöglicht und darüber hinaus durch eine Härtung gegen Verschleiß geschützt werden kann. Gemäß einer weiteren bevorzugten Ausführungsform stellt eine solche Ausnehmung ein Bett für Laufdrähte oder Platten bereit, so dass die Wälzkörper keinen direkten Kontakt mit der Fläche haben, sondern auf den Drähten beziehungsweise Platten abrollen.

Die in Bezug auf die verschiedenen Ausführungsformen beschriebenen Anschlusselemente stellen mögliche Bestandteile der erfindungsgemäßen Anschlusskonstruktion dar, die miteinander kombiniert werden können.

Erfindungsgemäß weist die Anschlusskonstruktion einen Flansch zur Verbindung mit äußeren Konstruktionselementen, insbesondere für den Anschluss an einen Antriebsmotor auf. Die durch den Flansch bereitgestellte feste Verbindung dient zur Positionierung des Wälzlagers innerhalb der umgebenden Anordnung oder zur Übertragung von Kräften und Drehmomenten zwischen der umgebenden Anordnung und den Lagerringen. Durch die Integration von Flansch und Wälzlager ist es vorteilhaft möglich, dass sich die Einheit aus Lager und Anschlusskonstruktion direkt montieren lässt, ohne dass in einem zusätzlichen Schritt ein Flansch am Lager angebracht werden muss und ohne dass weitere Einstell- und Ausrichtarbeiten notwendig sind. Darüber hinaus kann die Positionierung des Flansches beim Herstellungsprozess mit hoher Präzision erfolgen, wohingegen beim Anbringen eines Flansches während der Montage eventuell größere Ungenauigkeiten in Kauf genommen werden müssen.

Erfindungsgemäß ist der Flansch an dem zugeordneten Lagerring in Bezug auf eine an dem anderen Lagerring vorgesehene Verzahnung zur Positionierung des Antriebsmotors für einen Zahneingriff eines Motorritzels mit der Verzahnung angeordnet. Durch die einfache und exakte Positionierung des Antriebsmotors mittels des in den Lagerring integrierten Flansches kann der Verstellantrieb des Lagers optimiert werden. Ein präzise positionierter Zahneingriff zwischen Motorritzel und Verzahnung wird ohne zusätzliche Einstellarbeiten sichergestellt. Hierdurch werden insbesondere der Verschleiß und die Geräuschentwicklung des Zahneingriffs reduziert.

Gemäß einer weiteren bevorzugten Ausführungsform der Erfindung weist die Anschlusskonstruktion eine oder mehrere Durchführungen für Stecker oder Leitungen auf. Dadurch ist es vorteilhaft möglich, Durchführungen für Leitungen bereitzustellen, die beispielsweise elektrische Verbindungen herstellen oder dem Transport von Gas oder Flüssigkeiten dienen. Dadurch wird die Führung von Leitungen und Kabeln unterstützt und die Montage erleichtert. Die Öffnung einer solchen Durchführung kann dabei auch mit einer Abdeckung versehen sein.

Gemäß einer weiteren bevorzugten Ausführungsform weist die Anschlusskonstruktion eine oder mehrere Nuten auf, die der Aufnahme von Dichtungsringen dienen. Dichtungen erfüllen bei geschmierten Wälzlagern die Funktion, das Entweichen von Schmiermittel zu vermindern oder das Eindringen von Fremdpartikeln in den Lagerraum zu verhindern. Darüber hinaus kommen Dichtungen und speziell Dichtungsringe in speziellen Einsatzbereichen zur Anwendung, wenn zum Beispiel das Lager mit Druck beaufschlagt ist oder das Wälzlager in einer Flüssigkeit umgeben ist und das Eindringen der Flüssigkeit verhindert werden soll. Bei der erfindungsgemäßen Ausführung ist für die Aufnahme von Dichtungselementen eine oder mehrere Nuten vorgesehen. Dadurch ist es vorteilhafterweise möglich, die Dichtungselemente dicht und rutschfest am Lager anzubringen, ohne dass zusätzliche Montageschritte und/oder zusätzliche Abdichtarbeiten nötig sind.

Gemäß einer weiteren bevorzugten Ausführungsform weist die Anschlusskonstruktion Bohrungen und/oder Gewindebohrungen auf. Dadurch ist es zum einen vorteilhaft möglich, die Anschlusskonstruktion selbst, zum Beispiel durch Anschrauben, an der umgebenden Konstruktion anzubringen. Zum anderen ist vorteilhaft möglich, weitere Bauteile an der Anschlusskonstruktion anzubringen. Gemäß einer besonders bevorzugten Ausführungsform der Erfindung ist es insbesondere möglich, die Anschlusskonstruktion um weitere Anschlusskomponenten zu erweitern. Dazu werden Aufnahmebohrungen am Gehäuse der Anschlusskonstruktion dazu genutzt, die zusätzlichen Anschlusskomponenten zu befestigen. Dadurch ist es in vorteilhafter Weise möglich, neben einer festen Gruppe von Standard-Anschlusskomponenten ein Erweiterungspotential für zusätzliche oder speziellere Komponenten bereitzustellen.

Gemäß einer weiteren bevorzugten Ausführungsform der Erfindung weist die Anschlusskonstruktion eine oder mehrere Anschlüsse für eine elektrische Komponente auf. Umfasst das Wälzlager zum Beispiel eine Sensoreinheit oder eine andere elektrisch betriebene Komponente, ist es durch den erfindungsgemäßen Anschluss möglich, die notwendige Stromversorgung zentral über die Anschlusskonstruktion zu gestalten. Darüber hinaus ist es bei einer Kombination verschiedener Anschlusskomponenten vorteilhaft möglich, die elektrischen Anschlüsse in räumlicher Nähe zu anderen Leitungen oder Kabeln anzubringen, die ebenfalls über die Anschlusskonstruktion geführt werden, um so eine Bündelung der damit verbundenen Stränge zu ermöglichen. Optional kann die Anschlusskonstruktion auch einen Deckel für die elektrischen Anschlüsse aufweisen.

Gemäß einer weiteren bevorzugten Ausführungsform weist die Anschlusskonstruktion mindestens ein Element zur Zugentlastung eines Versorgungskabels auf. Dadurch ist es vorteilhaft möglich, eine Zugspannung auf Leitungen oder Schläuche zu vermeiden, die zu den Anschlüssen oder Durchführungen der Anschlusskonstruktion laufen oder in anderer Weise über die Anschlusskonstruktion geführt werden.

Gemäß weiterer Ausführungsformen der vorliegenden Erfindung weist die Anschlusskonstruktion eine Schutzabdeckung, mit der es vorteilhafterweise möglich ist, das Wälzlager oder am Wälzlager angebrachte Komponenten vor äußeren Einflüssen zu schützen. Bei einer weiteren möglichen Ausführungsform ist eine integrierte Befestigungsmöglichkeit für ein Schleifringsystem an der Anschlusskonstruktion angebracht.

Gemäß einer bevorzugten Ausführungsform sind die Außenflächen der Anschlusskonstruktion ganz oder teilweise mit einem Korrosionsschutz versehen, wodurch sich vorteilhafterweise Korrosionsschäden, wie sie zum Beispiel durch Oxidation hervorgerufen werden zu vermindern. Gemäß einer bevorzugten Ausführungsform ist die Korrosionsschutzschicht elektrisch isolierend. Gemäß einer besonders bevorzugten Ausführungsform besteht der Korrosionsschutz aus einer Grundierung mit einem Zweikomponenten-Grundanstrichstoff und einer Decklackierung mit einem Zweikomponenten-Deckanstrichstoff.

Gemäß einer bevorzugten Ausführungsform sind die Außenflächen der Anschlusskonstruktion teilweise mit einem Korrosionsschutz versehen, wobei auf der Anschlusskonstruktion vorhanden Anschraubflächen ausgespart sind und stattdessen mit einer elektrisch leitenden Schutzschicht versehen sind. Dadurch ist es vorteilhaft möglich eine leitende Verbindung zwischen der Anschlusskonstruktion und der umgebenden Konstruktion herzustellen, über die eine Erdung des Wälzlagers ermöglicht wird.

Gemäß einer Ausführungsform der Erfindung ist die Anschlusskonstruktion spanend aus einem Vollmaterial gefertigt. Dabei weist die Anschlusskonstruktion eine Laufbahn auf und fungiert damit als Außen- oder Innenring . Die Anschlusskonstruktion ist also zusammen mit dem zugeordneten Lagerring aus einem Stück gefertigt. In der Ausführungsform mit integrierter Laufbahn ist es erfindungsgemäß bevorzugt, wenn die Laufbahn durch eine umlaufende Vertiefung gebildet wird, durch die die Wälzkörper geführt werden. Dabei ist es besonders bevorzugt möglich, in die Vertiefung Laufdrähte oder Platten einzubetten, auf denen die Wälzkörper abrollen.

Gemäß einer weiteren Ausführungsform wird die Anschlusskonstruktion durch ein Gießverfahren hergestellt und zumindest teilweise zerspant. Auch hier kann eine Laufbahn direkt als Fläche oder Vertiefung des Körpers der Anschlusskonstruktion realisiert werden. Die Anschlusskonstruktion ist also auch in dieser Ausführungsform zusammen mit dem zugeordneten Lagerring aus einem Stück gefertigt.

### Kurze Beschreibung der Zeichnungen

- **Figur 1**: zeigt schematisch eine Anschlusskonstruktion mit verschiedenen Anschlusselementen gemäß einer beispielhaften Ausführungsform der vorliegenden Erfindung.
- **Figur 2**: zeigt schematisch eine Anschlusskonstruktion gemäß einer beispielhaften Ausführungsform der vorliegenden Erfindung.

### Ausführungsformen der Erfindung

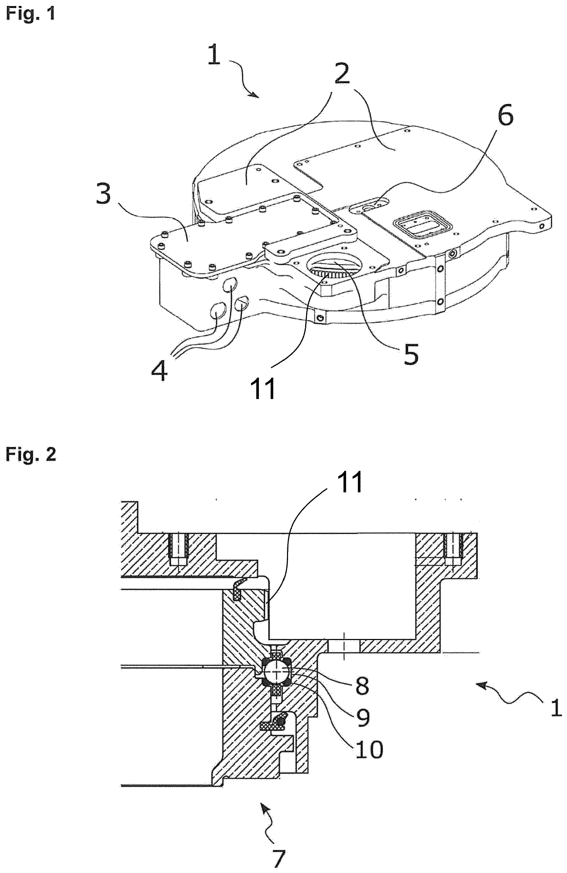

In **Figur 1** ist schematisch eine Anschlusskonstruktion 1 mit verschiedenen Anschlusselementen gemäß einer möglichen Ausführung der Erfindung dargestellt. Die Anschlusskonstruktion 1 bildet bei dieser Ausführungsform gleichzeitig den äußeren Ring des Wälzlagers, d.h. eine Laufbahn für die Wälzkörper 8 wird von einer umlaufenden Nut im Inneren der dargestellten Anschlusskonstruktion 1 gebildet. Die Anschraubflächen 2 weisen Bohrungen und/oder Gewindebohrungen auf, mit denen sich die Anschlusskonstruktion 1 an der umgebenden Konstruktion befestigen lässt oder an der weitere Elemente oder Anbauten angeschraubt werden können. Die Anschraubflächen 2 können dabei mit einer elektrisch leitfähigen Beschichtung versehen werden, so dass zwischen der Anschlusskonstruktion 1 und den an den an den Anschraubflächen 2 befestigten Komponenten ein Potentialausgleich stattfinden kann. Die übrigen Flächen können dagegen mit einem elektrisch isolierenden Korrosionsschutz versehen werden.

Die Anschlusskonstruktion 1 weist des Weiteren einen Kabelschacht auf, über den von außen Leitungen oder Kabel durch die Durchführungen 4 zu den innen liegenden Anschlüssen geführt werden können. Der Kabelschacht verfügt über einen, mit Befestigungsmitteln versehenen Deckel 3, der Zugang zu den Anschlüssen der Versorgungsleitungen ermöglicht. Eine weitere Anschraubfläche ist in Form eines Flansches 5 vorhanden, auf den der komplementäre Flansch eines Antriebsmotors angeschraubt werden kann. Schließlich weist die Anschlusskonstruktion 1 eine Mitnehmerbohrung 6 für das Anschrauben eines Schleifrings auf. Der Flansch 5 ist an dem zugeordneten Lagerring - in diesem Ausführungsbeispiel dem Außenring - in Bezug auf eine an dem anderen Lagerring - in diesem Ausführungsbeispiel dem Innenring 7 - vorgesehene Verzahnung 11 zur Positionierung des Antriebsmotors für einen Zahneingriff eines Motorritzels mit der Verzahnung 11 angeordnet. Bei der Montage des Antriebsmotors wird das Motorritzel des Antriebsmotors automatisch und präzise für einen Zahneingriff mit der Verzahnung 11 positioniert. Die Verzahnung 11 ist vorzugsweise in Form eines umlaufenden Zahnkranzes ausgebildet. Die Verzahnung 11 ist in dem dargestellten Ausführungsbeispiel am Außenumfang des Lagerrings 7 angeordnet. Es ist jedoch ebenfalls möglich die Verzahnung am Innenumfang des Lagerrings vorzusehen.

**Figur 2** zeigt schematisch eine Anschlusskonstruktion 1 gemäß einer möglichen Ausführung der Erfindung in Schnittdarstellung. Bei dieser Ausführungsform bilden der Außenring und die Anschlusskonstruktion eine integrale Einheit, die mittels Wälzkörpern 8 gegenüber dem stehenden zweiteiligen Innenring 7 drehbar gelagert ist. Die Laufbahnen der Wälzkörper 8 werden jeweils von umlaufenden Nuten 9 am Innenring 7 und am Außenring gebildet, in denen die Wälzkörper 8 auf Laufdrähten 10 abrollen.

### BEZUGSZEICHENLISTE

- 1: Anschlusskonstruktion
- 2: Anschraubfläche
- 3: Deckel für Kabeldurchführung
- 4: Durchführung für Kabel
- 5: Flansch für Antriebsmotor
- 6: Mitnehmerbohrung für Schleifring
- 7: Innenring
- 8: Wälzkörper
- 9: Nut mit Laufdrähten
- 10: Laufdraht
- 11: Verzahnung

## Patentansprüche

1. Wälzlageranordnung mit einem Außenring und einem zumindest teilweise innerhalb des Außenrings gelagerten Innenring (7), wobei der Außenring und der Innenring (7) um eine Drehachse relativ zueinander drehbar sind, wobei zwischen dem Außenring und dem Innenring (7) eine Mehrzahl von Wälzkörpern (8) angeordnet sind, wobei die Wälzlageranordnung eine Anschlusskonstruktion (1) aufweist, die entweder fest mit dem Innenring (7) oder fest mit dem Außenring verbunden ist, wobei die Anschlusskonstruktion (1) eine Mehrzahl von Anschlusskomponenten aufweist und die Anschlusskonstruktion (1) mindestens einen integrierten Flansch (5) aufweist, wobei die Anschlusskonstruktion (1) zusammen mit dem zugeordneten Lagerring aus einem Stück gefertigt ist und die Anschlusskonstruktion (1) spanend aus einem Vollmaterial gefertigt ist oder durch ein Gießverfahren hergestellt und zumindest teilweise zerspant ist, **dadurch gekennzeichnet, dass** der integrierte Flansch (5) zur Verbindung mit einem Antriebsmotor vorgesehen und an dem zugeordneten Lagerring in Bezug auf eine an dem anderen Lagerring vorgesehene Verzahnung (11) zur Positionierung des Antriebsmotors für einen Zahneingriff eines Motorritzels mit der Verzahnung (11) angeordnet ist.

2. Wälzlageranordnung nach Anspruch 1, wobei die Anschlusskonstruktion (1) mindestens eine Durchführung (4) für Stecker oder Leitungen aufweist.

3. Wälzlageranordnung nach einem der vorhergehenden Ansprüche, wobei die Anschlusskonstruktion (1) mindestens eine Nut zur Aufnahme von Dichtungen aufweist.

4. Wälzlageranordnung nach einem der vorhergehenden Ansprüche, wobei die Anschlusskonstruktion (1) mindestens eine Bohrung oder Gewindebohrung zum Anschrauben der Anschlusskonstruktion (1) aufweist.

5. Wälzlageranordnung nach einem der vorhergehenden Ansprüche, wobei die Anschlusskonstruktion (1) mindestens einen Anschluss für eine elektrische Komponente aufweist.

6. Wälzlageranordnung nach einem der vorhergehenden Ansprüche, wobei die Anschlusskonstruktion (1) mindestens ein Element zur Zugentlastung eines Versorgungskabels aufweist.

7. Wälzlageranordnung nach einem der vorhergehenden Ansprüche, wobei die Anschlusskonstruktion (1) mindestens eine Schutzabdeckung aufweist.

8. Wälzlageranordnung nach einem der vorhergehenden Ansprüche, wobei die Anschlusskonstruktion (1) zumindest teilweise mit einem elektrisch isolierenden Korrosionsschutz versehen ist.

9. Wälzlageranordnung nach einem der vorhergehenden Ansprüche, wobei die Anschlusskonstruktion (1) Anschraubflächen (5) aufweist, die zumindest teilweise mit einer elektrisch leitenden Schutzschicht versehen ist.

## Claims

1. Rolling bearing assembly having an outer race and an inner race (7) which is at least partially mounted within the outer race, wherein the outer race and the inner race (7) are rotatable relative to one another about a rotation axis, wherein a plurality of rolling elements (8) are disposed between the outer race and the inner race (7), wherein the rolling bearing assembly has a connection construction (1) which is fixedly connected either to the inner race (7) or the outer race, wherein the connection construction (1) has a plurality of connection components, and the connection construction (1) has at least one integrated flange (5), wherein the connection construction (1) conjointly with the associated bearing race is made from one piece, and the connection construction (1) is made by subtractive machining from a solid material, or is made by a casting method and is at least in part made by subtractive machining, **characterized in that** the integrated flange (5) is provided for connecting to a drive motor and is disposed on the associated bearing race in relation to a toothing (11) that is provided on the other bearing race for positioning the drive motor such that a motor sprocket meshes with the toothing (11).

2. Rolling bearing assembly according to Claim 1, wherein the connection construction (1) has at least one conduit (4) for plugs or lines.

3. Rolling bearing assembly according to one of the preceding claims, wherein the connection construction (1) has at least one groove for receiving seals.

4. Rolling bearing assembly according to one of the preceding claims, wherein the connection construction (1) has at least one bore or threaded bore for screw-fitting the connection construction (1) .

5. Rolling bearing assembly according to one of the preceding claims, wherein the connection construction (1) has at least one connector for an electrical component.

6. Rolling bearing assembly according to one of the preceding claims, wherein the connection construction (1) has at least one element for strain relief of a supply cable.

7. Rolling bearing assembly according to one of the preceding claims, wherein the connection construction (1) has at least one protective cover.

8. Rolling bearing assembly according to one of the preceding claims, wherein the connection construction (1) is at least in part provided with an electrically isolating anti-corrosion protection.

9. Rolling bearing assembly according to one of the preceding claims, wherein the connection construction (1) has screw-fitting faces (5) which are at least in part provided with an electrically conducting protective layer.

## Revendications

1. Ensemble formant palier à roulement comprenant une bague extérieure et une bague intérieure (7) logée au moins partiellement à l'intérieur de la bague extérieure, la bague extérieure et la bague intérieure (7) pouvant tourner l'une par rapport à l'autre sur un axe de rotation, une pluralité d'éléments roulants (8) étant disposés entre la bague extérieure et la bague intérieure (7), l'ensemble formant palier à roulement ayant une structure de connexion (1) qui est reliée soit de manière fixe à la bague intérieure (7) soit de manière fixe à la bague extérieure, la structure de connexion (1) comportant une pluralité de composants de connexion et la structure de connexion (1) comportant au moins une bride intégrée (5), la structure de connexion (1) étant fabriquée d'une seule pièce conjointement avec la bague de palier associée et la structure de connexion (1) étant fabriquée par enlèvement de copeaux à partir d'un matériau plein ou étant réalisée par un processus de coulée et au moins partiellement usinée, **caractérisé en ce que** la bride intégrée (5) est prévue pour être reliée à un moteur d'entraînement et est disposée au niveau de la bague de palier associée pour positionner le moteur d'entraînement par rapport à une denture (11), prévue au niveau de l'autre bague de palier, afin d'engrener un pignon de moteur avec la denture (11).

2. Ensemble formant palier à roulement selon la revendication 1, la structure de connexion (1) comportant au moins une traversée (4) destinée à des connecteurs ou des câbles.

3. Ensemble formant palier à roulement selon l'une des revendications précédentes, la structure de connexion (1) comportant au moins une rainure destinée à recevoir des garnitures d'étanchéité.

4. Ensemble formant palier à roulement selon l'une des revendications précédentes, la structure de connexion (1) comportant au moins un alésage ou alésage fileté destiné au vissage sur la structure de connexion (1) .

5. Ensemble formant palier à roulement selon l'une des revendications précédentes, la structure de connexion (1) comportant au moins une connexion destinée à un composant électrique.

6. Ensemble formant palier à roulement selon l'une des revendications précédentes, la structure de connexion (1) comportant au moins un élément de soulagement en traction d'un câble d'alimentation.

7. Ensemble formant palier à roulement selon l'une des revendications précédentes, la structure de connexion (1) comportant au moins un capot de protection.

8. Ensemble formant palier à roulement selon l'une des revendications précédentes, la structure de connexion (1) étant au moins partiellement pourvue d'une protection anticorrosion électriquement isolante.

9. Ensemble formant palier à roulement selon l'une des revendications précédentes, la structure de connexion (1) comportant des surfaces de vissage (5) qui sont au moins partiellement pourvues d'une couche de protection électriquement conductrice.
